# EUROPÄISCHE PATENTSCHRIFT

(11) **EP 0 663 421 B1**
(45) Veröffentlichungstag und Bekanntmachung des Hinweises auf die Patenterteilung: **28.04.1999**
(21) Anmeldenummer: 95100301.1
(22) Anmeldetag: 11.01.1995
(51) Int. Cl.: C08K 3/04, C08K 3/36, C08K 9/06, C08L 9/06

(54) **Reifenlaufstreifen auf Basis einer Kautschukmischung**
Tyre tread prepared with a rubber composition
Bande de roulement pour pneumatique basée sur une composition de caoutchouc

(30) Priorität: 14.01.1994 DE 4400996
(43) Veröffentlichungstag der Anmeldung: 19.07.1995
(73) Patentinhaber: Uniroyal Englebert Reifen GmbH, D-52068 Aachen (DE)
(72) Erfinder: Söhnen, Dietmar, Dr., D-52074 Aachen (DE); Russell, Richard, Dr., B-4731 Eymatten (BE)

(56) Entgegenhaltungen:
- EP-A- 0 346 147
- EP-A- 0 501 227
- EP-A- 0 599 643
- DATABASE WPI Week 9314, Derwent Publications Ltd., London, GB; AN 112844 & JP-A-5 051 485 (BRIDGESTONE CORP) 2. März 1993
- DATABASE WPI Week 8925, Derwent Publications Ltd., London, GB; AN 181476 & JP-A-1 118 551 (TOYO RUBBER IND KK) 11. Mai 1989

## Beschreibung

Die vorliegende Erfindung betrifft einen Reifenlaufstreifen auf Basis einer mit Schwefel vulkanisierbaren Kautschukmischung.

Die Betriebsleistung eines Reifenlaufstreifens ist von seiner Zusammensetzung abhängig. In dem Fall, in welchem ein verminderter Rollwiderstand zusammen mit einer guten Haftung bei Nässe (Naßgriff) gefordert wird, wird überlicherweise eine Kautschukmischung für den Reifenlaufstreifen verwendet, die ein Styrol-Butadien-Kautschuk ("SBR") in Kombination mit wenigstens einem anderen Dien-Elastomer und feinverteilter, gefällter Kieselsäure als verstärkendem Füllmaterial umfasst. Die Kieselsäure wird entweder alleine oder in Kombination mit Ruß eingesetzt. Ferner enthalten die Laufstreifenzusammensetzungen normalerweise Mineralöl als Weichmacher. Die Vulkanisation wird durch Schwefel bewirkt.

Die EP-A-0 501 227 beschreibt mit Schwefel vulkanisierbare Kautschukmischungen, die neben einer mit einer Silan behandelten Kieselsäure gegebenenfalls auch Ruß enthalten können.

Die JP-A-5 051 485 (Derwent Abstract Nr. 93-112844) und JP-A-1118551 (Derwent Abstract Nr. 89-181476) beschreiben jeweils eine Reifenlaufstreifen bzw. eine Kautschukzusammensetzung aus einer üblichen Kautschukzusammensetzung die, neben Kieselsäure, Ruß mit der Bezeichnung N-110 als Füllmaterial enthält.

Die EP-A-0 346 147 beschreibt Reifenlaufstreifen deren Kautschukzusammensetzung Ruße mit einer Stickstoffadsorptionszahl (N₂SA) von 146-159 m²/g und einer bestimmten Teilchengrößenverteilung umfassen.

Die Polymerisation zum Styrol-Butadien-Copolymer kann entweder in wässriger Emulsion oder in Lösung in einem organischen Lösungsmittel durchgeführt werden. Die Brauchbarkeit von diesem Material als Kautschukmischung für einen Laufstreifen ist jedoch von seiner chemischen Struktur abhängig. Im einzelnen wird die Haftung auf feuchtem Boden durch den Anteil von Styrol und auch durch den Anteil der Butadien-Komponente des Styrol-Butadien-Copolymeren, welche in Form von vinylischen Strukturen im Copolymer vorliegt, in der Zusammensetzung bestimmt.

Im Falle des emulsionspolymerisierten Styrol-Butadien-Kautschuks kann der Vinyl-Gehalt der Butadien-Komponente nicht exakt kontrolliert werden. Bei der Lösungspolymerisation kann der Vinyl-Gehalt der Butadien-Komponente jedoch im voraus bestimmt werden. Aufgrund der Tatsache, daß die Oberfläche der Kieselsäuren, im Gegensatz zu der Oberfläche von Ruß, gegenüber Kautschuk vermindert aktiv ist, ist es notwendig, die Kieselsäure mit einem Silankupplungsmittel zu behandeln, um die Verbindung der Kieselsäureoberfläche mit dem Kautschuk sicher zu stellen. Diese Behandlung wird normalerweise so durchgeführt, daß das Silankupplungsmittel zusammen mit der Kieselsäure während des Mischprozesses zum Kautschuk zugegeben wird.

Obwohl die oben beschriebene moderne Kieselsäuretechnololgie einen verringerten Reifenrollwiderstand verglichen zu Kautschukmischungen, die nur auf Ruß basieren zur Folge hat, hat die Verwendung von Kieselsäure, wie nachfolgend zu erläutern sein wird, auch schwerwiegende Nachteile.

1. Laufstreifen, die auf Kieselsäure enthaltenden Kautschukmischungen basieren, haben einen schlechteren Abnutzungswiderstand gegen Abrieb (Verschleiß-Lebensdauer), als vergleichbare Zusammensetzungen, die Ruß enthalten. Folglich ist die Verschleiß-Lebensdauer für Kieselsäure enthaltende Laufstreifen geringer als für solche, die Ruß enthalten, insbesondere unter hoher Beanspruchung, die beispielsweise beim Kurvenfahren mit hoher Geschwindigkeit angetroffen wird.

2. Die Haftung auf nassem oder feuchtem Boden ist bei Laufstreifenmischungen, die Kieselsäure enthalten, schlechter als bei jenen, die Ruß enthalten. Dies ist vor allem bei Fahrzeugen der Fall, die nicht mit einem Antiblockiersystem (ABS) ausgerüstet sind.

3. Die Kautschukmischungen enthalten Kieselsäure in Anteilen von wenigstens 15 Gew.-Teilen pro 100 Gew.-Teilen Kautschuk. Silankupplungsmittel, die für die Kieselsäure enthaltenden Mischungen wesentlich sind verlängern jedoch die Mischzeit der Kautschukmischung, verglichen mit Mischungen, die Ruß als einziges verstärkendes Füllmaterial enthalten. Die Ursache hierfür ist, daß die Behandlung der Kieselsäureoberfläche mit dem Silankupplungsmittel auf einer Stufe während des Mischens vor der Zugabe gewisser anderer Mischungsbestandteile, wie beispielsweise Zinkoxid zu erfolgen hat. Diese anderen Mischungsbestandteile würden ansonsten die Behandlung der Kieselsäure mit dem Silan behindern.

Im Falle von Mischungen, die Ruß enthalten ist eine besondere Behandlung der Rußoberfläche nicht notwendig, da Ruß, im Gegensatz zu Kieselsäure, gegenüber Kautschuk inhärent aktiv ist.

4. Kautschukmischungen für Reifenlaufstreifen, die Kieselsäure als Füllmaterial enthalten, besitzen einen höheren elektrischen Widerstand als äquivalente Mischungen, die Ruß in Reifenqualität enthalten. Dies ist auf die besondere morphologische Struktur von solchen Rußen zurückzuführen. Diese weisen im Vergleich zu Kieselsäure einen geringeren elektrischen Widerstand gegenüber elektrischen Entladungen auf. Aufgrund dieses Phänomens neigen Reifen mit Kieselsäure enthaltenden Laufstreifenmischungen eher zu elektrischer Aufladung, als jene Mischungen, die Ruß enthalten. Dies kann zu erhöhter Feuergefährlichkeit durch elektrische Entladungen in Umgebungen führen, wo entzündliche Flüssigkeiten oder Dämpfe auftreten.

5. Kieselsäure ist teurer als Ruß und besitzt darüberhinaus eine höhere Dichte als Ruß. Aus diesem Grunde sind die Materialkosten für Reifen, die Kieselsäure enthaltende Kautschukmischungen umfassen, höher als für jene, deren Kautschukmischungen für die Reifenlaufstreifen Ruß enthalten.

Es war daher eine Aufgabe der vorliegenden Erfindung, die oben erläuterten Nachteile von Kieselsäure enthaltenden Kautschukmischungen für Reifenlaufstreifen zu beseitigen.

Diese Aufgabe wurde erfindungsgemäß gelöst durch einen Reifenlaufstreifen erhältlich durch Vulkanisieren einer mit Schwefel vulkanisierbaren Kautschukmischung auf der Basis wenigstens eines Copolymeren eines konjugierten Diens und einer aromatischen Vinylverbindung enthaltend Ruß und gegebenenfalls feinverteilte, gefällte Kieselsäure als Füllmaterial, gegebenenfalls wenigstens ein Dien-Elastomer als weiteres Polymer sowie gegebenenfalls weitere übliche Zusätze, dadurch gekennzeichnet, daß als Ruß der Ruß mit der ASTM Bezeichnung N 121 eingesetzt wird und daß das Füllmaterial in einer Menge von 20-150 Gew.-Teilen, bezogen auf 100 Gew.-Teile der Gesamtmenge Polymer, enthalten ist.

Vorzugsweise enthält die Kautschukmischung das Füllmaterial in einer Menge von 40-120 Gew.-Teile, bezogen auf 100 Gew.-Teile der Polymere (Copolymere und gegebenenfalls zusätzliche Dien-Elastomere).

Der Ruß N 121, der gemäß der Erfindung in der Kautschukmischung zur Anwendung kommt, besitzt eine besondere Morphologie und einen mittleren Teilchendurchmesser von 18,8 nm und eine EM-Oberfläche (Electron Microscope Image Ananlysis, ASTM 3849-89) von 131 m²/g.

Für nähere Einzelheiten wird verwiesen auf C.R. Herd et al, in "Morphology of Carbon Black Aggregates: Fractal versus Euclidean Geometry", Paper Nr. 38, vorgetragen auf dem Meeting of the Rubber Division, American Chemical Society, Toronto, Ontario, Canada, 21.-24. Mai 1991.

Dieser Ruß wird als Füllmaterial alleine eingesetzt oder er kann in Kombination mit feinverteilter, gefällter Kieselsäure als weiterem Füllmaterial der Kautschukmischung zugesetzt werden.

Gemäß der Erfindung kann grundsätzlich jede feinverteilte, gefällte Kieselsäure eingesetzt werden, wie sie üblicherweise bei der Herstellung von Kautschukmischungen eingesetzt wird und die bei dem auf diesem Gebiet tätigen Fachmann als bekannt vorausgesetzt werden kann. In diesem Zusammenhang sei insbesondere auf die in der EP-0 501 227, EP-0 157 703 und der DE-2 410 014 beschriebenen Kieselsäuren verwiesen.

Allgemein können demnach gefällte und feinverteilte Kieselsäuren als Füllstoff in der erfindungsgemäßen Zusammensetzung eingesetzt werden, die eine BET-Fläche von 40-350 m²/g, insbesondere von 100-250 m²/g, eine CTAB-Fläche von 50-350 m²/g, vorzugsweise von 100-250 m²/g und einen mittleren Teilchendurchmesser von 10-150 nm, vorzugsweise 10-100 nm und eine DBP-Absorption 50-350 ml/100 g, vorzugsweise 150-250 ml/100 g besitzen.

Besonders bevorzugt ist jedoch eine Kieselsäure mit besonderer Morphologie die erhältlich ist durch Umsetzung von Alkalisilikat mit Mineralsäuren bei Temperaturen von 60°C bis 95°C unter Aufrechterhaltung eines pH-Wertes von 7,5 bis 10,5 unter kontinuierlicher Rührung, die je nach Bedarf intensiviert werden kann, und unter Einstellung eines Feststoffgehaltes in der Fällungssuspension von 90 bis 120 g/l, einer anschließenden Rücksäuerung auf pH-Werte ≤ 5, Filtration, Trocknung und bei Bedarf einer Vermahlung und/oder Granulation.

Diese Kieselsäuren sind dadurch gekennzeichnet, daß sie N₂-Oberflächen (Areameter, Fa. Ströhlein, gemäß ISO 5794/Annex D) von 35 m²/g bis 350 m²/g, insbesondere 100 bis 200 m²/g, bei einem BET/CTAB-Verhältnis von 0,8 bis 1,2 (pH 9, gemäß Jay, Janzen und Kraus in "Rubber Chemistry and Technology" 44 (1971) 1287), besitzen und gleichzeitig, wie unten in der Tabelle I angegeben, je nach Oberflächenbereich ein Porenvolumen, gemessen mittels Quecksilberporosimetrie (DIN 66 133), Silanolgruppendichten, gemessen in Form der Sears-Zahlen (G.W. Sears, Analyt. Chemistry 12, 1981-83 (1956)) sowie eine mittlere Aggregatgröße, gemessen mittels Photonenkorrelationsspektroskopie, besitzen:

**Tabelle I**

| N₂-Oberfläche | Hg-Porosimetrie | Sears-Zahl V₂ | Mittlere Aggregatgröße |
|---|---|---|---|
| [m²/g] | [ml/g] | [ml] | [nm] |
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

Die Kieselsäuren sind ferner gekennzeichnet durch gute Vermahlbarkeit, wiedergegeben durch die mittlere Teilchengröße nach Malvern-Laserbeugung [D (4,3)] von ≤ 11 µm, insbesondere ≤ 10 µm, gemessen nach Vermahlung auf einer Alpine-Kolloplex-Prallstiftmühle (Z 160) bei einer Durchsatzleistung von 6 kg/h.

Diese Vermahlbarkeit kann charakterisiert werden u.a. durch die Energie, die benötigt wird, um eine bestimmte Teilchenfeinheit zu erzielen oder umgekehrt durch die Teilchenfeinheit, die sich einstellt, wenn ein Mahlaggregat bei gleicher Leistung und gleichem Produktdurchsatz betrieben wird. Letztere ist der Einfachheit wegen die Methode der Wahl. Als Mühlentyp wird eine Alpine-Kolloplex-Prallstiftmühle (Z 160) eingesetzt und bei einem konstanten Produktdurchsatz von 6 kg/h betrieben.
Zur Charakterisierung der Teilchenfeinheit wird der mittlere, volumengewichtete Teilchendurchmesser MTG [D(4,3)] aus der Messung mittels Laserbeugung gewählt (Fa. Malvern Instruments, Modell 2600c).
Für weitere Einzelheiten zu dieser Kieselsäure mit der besonderen Morphologie wird auf die DE-4 334 201 verwiesen.

Die Oberflächen der vorgenannten Kieselsäuren, einschließlich der Kieselsäuren mit der besonderen Morphologie, können zusätzlich mit Silankupplungsmitteln (Organosilanen) der nachfolgenden Formeln I bis III

[Rₙ¹-(RO)₃₋ₙ Si-(Alk)ₘ - (Ar)ₚ]_{q}[B] (I),

Rₙ¹ (RO)₃₋ₙ Si-(Alkyl) (II),

oder

Rₙ¹ (RO)₃₋ₙ Si-(Alkenyl) (III),

modifiziert werden, in denen bedeuten
- B:: -SCN, -SH, -Cl, -NH₂ (wenn q = 1) oder -Sₓ (wenn q = 2),
- R und R¹:: eine Alkylgruppe mit 1 bis 4 Kohlenstoffatomen, den Phenylrest, wobei alle Reste R und R¹ jeweils die gleiche oder eine verschiedene Bedeutung haben können,
- n:: 0,1 oder 2,
- Alk:: einen zweiwertigen geraden oder verzweigten Kohlenwasserstoffrest mit 1 bis 6 Kohlenstoffatomen,
- m:: 0 oder 1,
- Ar:: einen Arylenrest mit 6 bis 12 C-Atomen, bevorzugt 6 C-Atome,
- p:: 0 oder 1 mit der Maßgabe, daß p und n nicht gleichzeitig 0 bedeuten,
- x:: eine Zahl von 2 bis 8,
- Alkyl:: einen einwertigen geraden oder verzweigten gesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Im Zusammenhang mit den Organosilanen, deren Herstellung und deren Kombination mit Kieselsäuren wird ferner auf die nachfolgende Literatur verwiesen:
S. Wolff "Reinforcing and Vulcanization Effects of Silane Si 69 in Silica-Filled Compounds", Kautschuk + Gummi, Kunststoffe 34, 280-284 (1981);
S. Wolff "Silanes in Tire Compounding After Ten Years - Review", Vortrag gehalten anläßlich des Third Annual Meeting and Conference on Tire Science and Technology, The Tire Society, 28.-29. März 1984, Akron, Ohio, USA;
S. Wolff "Optimization of Silane-Silica OTR Compounds. Part 1: Variations of Mixing Temperature and Time During the Modification of Silica with Bis(3-triethoxysilylpropyl) tetrasulfide", Rubber Chem. Technol. 55, 967-989 (1982);
S. Wolff, R. Panenka " Present Possibilities to Reduce Heat Generation of Tire Compounds", Vortrag gehalten anläßlich der International Rubber Conference IRC'85 in Kyoto, Japan;
S. Wolff, R. Panenka, E.H. Tan "Reduction of Heat Generation in Truck Tire Tread and Subtread Compounds", Vortrag gehalten anläßlich der International Conference on Rubbers and Rubber-like Materials, Jamshedpur, Indien, 6.-8. November 1986;
S. Wolff "The Influence of Fillers on Rolling Resistance", Vortrag gehalten anläßlich einer Tagung der Rubber Division, American Chemical Society, New York/NJ, USA, 8.11. April 1986.

Die erfindungsgemäß für die Vorbehandlung der Kieselsäuren eingesetzten Silankupplungsmittel sind dem Fachmann aus dem weiteren Stand der Technik, insbesondere aus der EP-A-0 447 066, der DE-A-2 062 883 oder der DE-A-2 457 446 bekannt. Bevorzugt im Rahmen der vorliegenden Erfindung als Silankupplungsmittel sind insbesondere solche Silane, die wenigstens eine Alkoxylgruppe im Molekül besitzen. Diese Silane sind ausgewählt aus Bis(3-triethoxysilylpropyl)tetrasulfid, Bis(2-triethoxysilylethyl)tetrasulfid, Bis(3-trimethoxysilylpropyl)tetrasulfid, Bis(2-trimethoxysilylethyl)tetrasulfid, 2-Mercaptoethyltriethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxysilan, 2-Chloroethyltrimethoxysilan, 2-Chloroethyltriethoxysilan, 3-Trimethoxysilylpropyl-N,N-dimethylthiocarbamoyltetrasulfid, 3-Triethoxysilylpropyl-N,N-dimethylthiocarbamoyltetrasulfid, 3-Trimethoxysilylpropylbenzothiazoltetrasulfid, 3-Triethoxy-silylpropylbenzothiazoltetrasulfid, 3-Triethoxysilylpropyl-methacrylatmonosulfid, 3-Trimethoxysilylpropylmethacrylatmonosulfid. Darunter sind Bis(3-triethoxysilylpropyl)tetrasulfid und 3-Trimethoxysilylpropylbenzothiazoltetrasulfid bevorzugt. Des weiteren können Bis (3-diethoxymethylsilylpropyl)tetrasulfid, 3-Mercaptopropyldimethoxymethylsilan, 3-Nitropropyldimethoxymethylsilan, 3-Chloropropyldimethoxymethylsilan, Dimethoxymethylsilylpropyl-N,N-dimethylthiocarbamoyltetrasulfid, Dimethoxymethylsilylpropylbenzothiazoltetrasulfid, 3-Thiocyanatopropyltriethoxysilan, 3-Thiocyanatopropyltrimethoxysilan, Trimethoxyvinylsilan, Triethoxyvinylsilan als Silankupplungsmittel eingesetzt werden.

Das Silankupplungsmittel wird in einer Menge von 0,2-30 Gew.-Teilen, vorzugsweise von 0,5-15 Gew.-Teilen, bezogen auf 100 Gew.-Teile der Kieselsäure eingesetzt. Die Reaktion zwischen der Kieselsäure und dem Silankupplungsmittel kann während der Herstellung der Mischung (in situ) oder, alternativ hierzu, außerhalb durchgeführt werden. Letzteres führt zu einer vorbehandelten (vormodifizierten) Kieselsäure, die als solche der Mischung zugesetzt werden kann.

Das Verhältnis der eingesetzten Volumina von Kieselsäure zu Ruß beträgt 1:4 bis 5:1, vorzugsweise 1:2 bis 3:1.

Das erfindungsgemäß eingesetzte konjugierte Dien ist ausgewählt aus 1,3-Butadien, Isopren, 2,3-Dimethyl-1,3-butadien, Chloropren, 1,3-Pentadien, Hexadien oder Gemischen davon.

Die erfindungsgemäß eingesetzte aromatische Vinylverbindung ist ausgewählt aus Styrol, α-Methylstyrol, p-Methylstyrol, o-Methylstyrol, p-Butylstyrol, Vinylnaphthalin oder Gemischen davon.

Das molare Verhältnis von konjugiertem Dien zur aromatischen Vinylverbindung beträgt 98:2 bis 40:60, vorzugsweise 95:5 bis 55:45.

Besonders bevorzugt ist es, Copolymere für die Kautschukmischung einzusetzen, die durch Lösungspolymerisation des konjugierten Diens mit der aromatischen Vinylverbindung in einem geeigneten, inerten Lösungsmittel erhalten werden. Geeignete Lösungsmittel sind insbesondere Pentan, Hexan, Cyclohexan, Heptan oder deren Gemische sowie Benzol, Xylol, Toluol oder deren Gemische sowie Tetrahydrofuran, Diethylether oder deren Gemische oder Gemische der genannten Kohlenwasserstoffe mit den genannten aromatischen Kohlenwasserstoffen.

Gemäß der vorliegenden Erfindung kann die Kautschukmischung ein Copolymer von einem Dien und einer aromatischen Vinylverbindung, aber auch ein Gemisch von wenigstens zwei unterschiedlichen Copolymeren eines Diens und einer aromatischen Vinylverbindung enthalten. Das Dien und die aromatische Vinylverbindung der verschiedenen Copolymere sind jeweils unabhängig voneinander aus den oben angeführten Verbindungen für das konjugierte Dien und die aromatische Vinylverbindung ausgewählt.

Besonders bevorzugt ist eine Kautschukmischung umfassend zwei unterschiedliche der oben genannten, insbesondere durch Lösungspolymerisation hergestellten Copolymere, die aus Styrol und Butadien erhältlich sind und einen unterschiedlichen Styrol - und/oder Vinylanteil aufweisen, der Styrolanteil zwischen 8 und 40%, vorzugsweise zwischen 20 und 40%, der Vinylanteil zwischen 10 und 50%, vorzugsweise zwischen 20 und 50% beträgt. Dabei gilt, daß der Anteil Styrol + Vinyl + cis-/trans-Isomer in der Polymermolekülkette 100% ist. Die beiden unterschiedlichen Copolymere werden im Verhältnis 2:1 bis 1:2, vorzugsweise im Verhältnis 1:1 zueinander eingesetzt.

Die Kautschukmischung kann ferner bis zu 70 Gew.-Teile, bezogen auf 100 Gew.-Teile des Copolymer-Gehalts aus dem Dien und der aromatischen Vinylverbindung, mindestens eines Dien-Elastomers enthalten, das ausgewählt ist aus Naturkautschuk (NK), Polyisopren und Polybutadien oder Copolymeren aus Isopren und Butadien.

Diese Dien-Elastomere können aus den zugrundeliegenden Monomeren nach dem Fachmann bekannten Verfahren in Gegenwart von Übergangsmetallkatalysatoren und insbesondere solchen, die Kobalt, Titan, Nickel oder Neodym enthalten, hergestellt werden. Besonders überraschend wurde gefunden, daß die bedingt durch den Einsatz des Rußes mit besonderer Morphologie schon erheblich verbesserten Eigenschaften der aus der erfindungsgemäßen Kautschukmischung hergestellten Reifenlaufstreifen, durch die Verwendung von Dien-Elastomeren, die in Gegenwart von Neodym enthaltenden Katalysatoren hergestellt wurden, weiter verbessert werden können.
Hinsichtlich der Herstellung der Butadien-Elastomere in Gegenwart von Neodym enthaltenden Katalysatoren (Nd-BR) wird auf E. Lauretti et al, in "Tire Technology International", 1993, Seite 72 ff. verwiesen.

Darüberhinaus kann die Zusammensetzung bis zu 70 Gew.-Teile, bezogen auf 100 Gew.-Teile des Copolymers aus einem Dien und einer aromatischen Vinylverbindung, welches durch Lösungspolymerisation hergestellt ist, zusätzlich eines Copolymers aus einem Dien und einer aromatischen Vinylverbindung enthalten, welches durch Emulsionspolymerisation hergestellt ist. Hinsichtlich der in Frage kommenden Diene und aromatischen Vinylverbindungen wird auf die obigen Ausführungen verwiesen. Verfahren zur Durchführung derartiger Emulsionspolymerisationen sind dem Fachmann aus der einschlägigen Literatur bekannt.

Insbesondere für erhöhte Haftungseigenschaften des Laufstreifens bei Nässe enthält die Kautschukmischung 2-20 Gew.-%, bezogen auf die Kautschukgesamtmischung, Styrol.

Die Kautschukmischung kann ferner die üblichen Zusätze in der üblichen Dosierung enthalten, wie insbesondere Weichmacher (Mineralöle), Alterungsschutzmittel, Schwefel, Vulkanisationsbeschleuniger (Sulfenamide, Thiazole, Guanidine), anorganische Pigmente, weitere, jedoch andere Füllstoffe als die oben genannten, Aktivatoren (z.B. Stearinsäure, Zinkoxid), Wachse.

Die Kautschukmischung wird hergestellt durch
1) Mischen von wenigstens einem Copolymeren eines konjugierten Diens und einer aromatischen Vinylverbindung und gegebenenfalls wenigstens einem Dien-Elastomer als weiterem Polymer, mit einem Füllstoff bestehend aus Ruß N 121 und gegebenenfalls Kieselsäure, sowie der üblicherweise verwendeten Zusätze mit Ausnahme des Vulkanisationssystems unter gleichzeitigem Erwärmen der Zusammensetzung auf eine Temperatur bis zu 180°C,
2) Zumischen des Vulkanisationssystems bei einer Temperatur unterhalb der Vulkanisationstemperatur.

Hinsichtlich der Bedeutung des konjugierten Diens, der aromatischen Vinylverbindung, des weiteren Dien-Elastomers des Füllstoffs (Ruß und gegebenenfalls Kieselsäure), der üblichen Zusätze, des Vulkanisationssystems und des Silankupplungsmittels wird auf die obigen Ausführungen verwiesen.

Die Durchführung der Mischvorgänge und der Vulkanisation kann in den dem Fachmann bekannten Apparaturen (z.B. in Knetern) erfolgen. In der ersten Stufe des Mischens sollte eine Temperatur von wenigstens 130°C und vorzugsweise eine Temperatur zwischen 145 und 170°C eingestellt werden.

Das Verfahren kann während des Mischens ferner auch so geführt werden, daß das Gemisch zunächst auf die vorgegebene Temperatur erwärmt und dann wieder auf eine Temperatur unterhalb der Vulkanisationstemperatur abgekühlt wird. Dieser Zyklus ist wenigstens einmal zu durchlaufen und kann gegebenenfalls mehrfach wiederholt werden.

Die Kautschukmischung wird nach dem Vulkanisieren in Gegenwart eines geeigneten Vulkanisationssystems unter üblichen, dem Fachmann bekannten Bedingungen als Reifenlaufstreifen verwendet.

Die vorliegende Erfindung wird durch die nachfolgenden Beispiele erläutert, ohne jedoch darauf beschränkt zu sein.

### Beispiele:

In den nachfolgenden Beispielen wurde, wo angegeben, als Ruß mit der besonderen Morphologie N 121 (Handelsprodukt der Firma Columbian Carbon Deutschland) eingesetzt. N 121 besitzt einen mittleren Teilchendurchmesser von 18,8 nm und eine EM-Oberfläche von 131 m²/g.

Als Dien-Elastomer wurde in den Beispielen gemäß der Erfindung ein Polybutadien eingesetzt, welches durch Lösungspolymerisation von Butadien in Gegenwart eines Neodym-enthaltenden Katalysators hergestellt wurde. (Nd-BR, Handelsprodukt der Firma Bayer, Leverkusen). Für nähere Einzelheiten wird auf E. Lauretti et al, in "Tire Technology International", 1993, Seite 72 ff. verwiesen.

Die gemäß der Erfindung einsetzbaren Kieselsäuren mit besonderer Morphologie können gemäß den nachfolgenden Beispielen 1 bis 3 hergestellt werden:

### Beispiel 1: Herstellung einer Kieselsäure im N₂-Oberflächenbereich von ≤ 100 m²/g

In einem Bottich werden unter Rühren 43,5 m³ heißes Wasser und so viel handelsübliches Natronwasserglas (Gewichtsmodul 3,42, Dichte 1.348) vorgelegt, bis pH 8,5 erreicht ist. Unter Aufrechterhaltung einer Fälltemperatur von 88°C und pH 8,5 werden nun 16,8 m³ des gleichen Wasserglases und Schwefelsäure (96%ig) in 150 Minuten gleichzeitig an gegenüberliegenden Stellen zugegeben. Es stellt sich ein Feststoffgehalt von 100 g/l ein. Danach wird weiter Schwefelsäure bis zum Erreichen von pH < 5 zugegeben. Der Feststoff wird auf Filterpressen abgetrennt, gewaschen und der Pressenteig einer Sprühtrocknung oder Drehrohrofentrocknung unterzogen und vermahlen oder auch nicht vermahlen.

Das erhaltene Produkt hat eine N₂-Oberfläche von 80 m²/g, eine Aggregatgröße von 1320 nm und eine Vermahlbarkeit von 10 µm. Die Sears-Zahl (V₂) beträgt 9,0 und die Hg-Porosimetrie 2,7 ml/g.

### Beispiel 2: Herstellung einer Kieselsäure im N₂-Oberflächenniveau von 100-150 m²/g

Es wird gemäß Beispiel 1 verfahren, mit der Ausnahme, daß in der Fällvorlage und während der Fällung ein pH-Wert von 9,0 konstant gehalten wird. Nach 135 Minuten stellt sich ein Feststoffgehalt in der Fällungssuspension von 93 g/l ein.

Die Kieselsäure hat eine N₂-Oberfläche von 120 m²/g, eine Vermahlbarkeit von 8,8 µm, eine Sears-Zahl von 9,1 bei einer Aggregatgröße von 490 nm und einem Hg-Porenvolumen von 2,85 ml/g.

### Beispiel 3: Herstellung einer Kieselsäure im N₂-Oberflächenniveau von 150-200 m²/g

Es wird gemäß Beispiel 1 verfahren mit der Ausnahme, daß in der Fällvorlage und während der Fällung ein pH-Wert von 9,5 konstant gehalten wird. Nach 135 Minuten stellt sich ein Feststoffgehalt in der Fällungssuspension von 93 g/l ein.

Die Kieselsäure hat eine N₂-Oberfläche von 184 m²/g, eine Vermahlbarkeit von 8,7 µm, eine Sears-Zahl von 15,7 bei einer Aggregatgröße von 381 nm und einem Hg-Porenvolumen von 2,26 ml/g.

### Kautschukmischungen:

a) Vergleichsmischung A umfasst ein Kautschukgemisch aus Polybutadien (CB 10, ein mit Kobalt enthaltenden Katalysatoren in Lösungspolymerisation hergestelltes Polybutadien, Handelsprodukt der Firma Hüls, Deutschland) und natürlichem Kautschuk mit einem einzigen lösungspolymerisierten Styrol-Butadienkautschuk (SBR), mit einem bestimmten Anteil von Styrol und Vinyl-Butadien, zusammen mit Kieselsäure als einzigem Füllmaterial sowie einem Silankupplungsmittel. Diese Zusammensetzung ist für jene repräsentativ, die gegenwärtig in der Praxis eingesetzt werden und die die Anforderungen an Belastung hinsichtlich der verminderten Rollwiderstandes und der Haftung bei Nässe (Naßgriff) erfüllen.
b) Mischung B gemäß der Erfindung enthält neben dem besonderen Ruß (N 121) zwei unterschiedliche lösungspolymersierte Styrol-Butadienkautschuke Nr. 2 und Nr. 3 anstelle einem Kautschuk, wie in Mischung A oder C. In dieser Mischung B ist der Gehalt an Styrol- und Vinyl-Gruppen, der von den beiden Lösungs-SBR's zusammen beigetragen wird vergleichbar zu denen, wie in Mischung A oder C durch den SBR Nr. 1 alleine. Obwohl die Mischungen B und C ansonsten identisch sind und die Styrol-Anteile die gleiche Größenordnung besitzen, bewirkt die Mischung B, im Vergleich zur Mischung C, auf Asphalt einen erhöhten Naßgriff bei Kraftfahrzeugen, die nicht mit dem Antiblockiersystem (ABS) ausgerüstet sind. Trotz dieser Verbesserung im Naßgriff bleibt der Rollwiderstand und die Abriebeigenschaft unbeeinflußt.
c) Mischung C nach der vorliegenden Erfindung enthält Ruß als teilweisen Ersatz für die Kieselsäure, wobei der Ruß einen speziellen morphologischen Charakter besitzt. Obwohl die Mischungen A und C ansonsten identisch sind, bewirkt die Mischung C eine erhebliche Verbesserung im Abriebverhalten des Reifenlaufstreifens und ebenso Verbesserungen im Naßgriff. Der Rollwiderstand ist jedoch reduziert.
d) Vergleichsmischung D enthält einen nicht erfindungsgemäßen Ruß und enthält eine um 5 Gew.-Teile (bezogen auf Gesamtmenge Polymer) höhere Konzentration als in Mischung C, um eine gleiche Härte des Vulkanisates sicherzustellen.
   Die Verbesserung im Abriebverhalten, die durch Mischung D bewirkt wird, ist viel geringer als die, die von Mischung C bewirkt wird. Ferner ist der Rollwiderstand höher, was ein Indiz dafür ist, gemäß der vorliegenden Erfindung einen Ruß mit speziellem morphologischen Charakter einzusetzen.
e) Mischung E ist wie Mischung C eine Zusammensetzung gemäß der vorliegenden Erfindung, jedoch mit einem unterschiedlichen Verhältnis von Kieselsäure zu Ruß. Auf diese Art und Weise wird bei gleichem Rollwiderstand gleichzeitig eine Verbesserung des Naßgriffs und des Abriebwiderstands erzielt.
f) Mischung F entspricht der Mischung E mit dem Unterschied, daß gemäß Mischung F die Kieselsäure mit der besonderen Morphologie des Beispiels 1 eingesetzt wurde. Alternativ hierzu können auch die Kieselsäuren der Beispiele 2 oder 3 eingesetzt werden ohne, daß sich das Ergebnis entscheidend ändert. Ein Einsatz der Kieselsäure mit besonderer Morphologie bewirkt verbesserte Abriebeigenschaften.
   Die nachfolgende Tabelle faßt die oben genannten Beispiele zusammen. 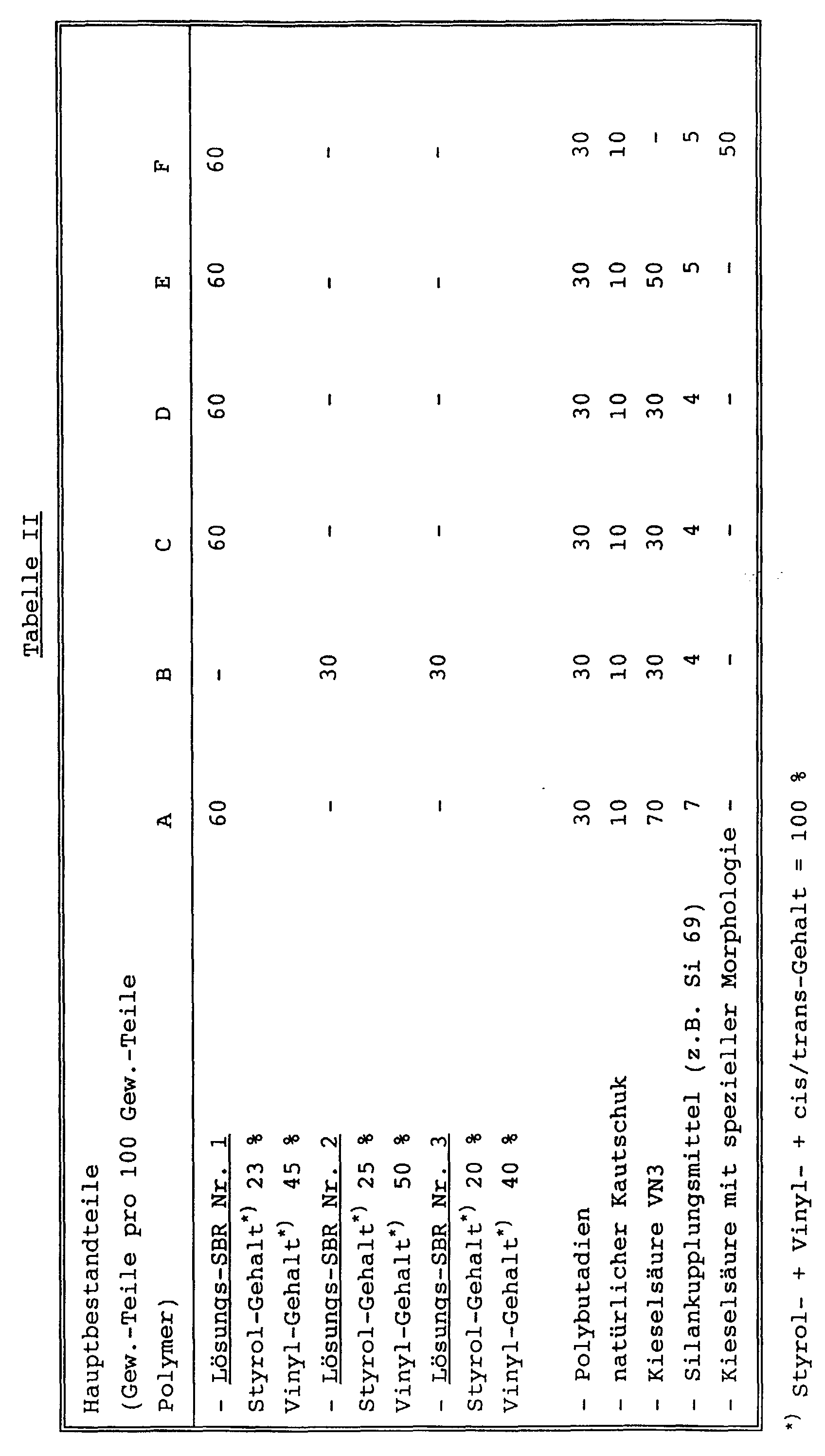 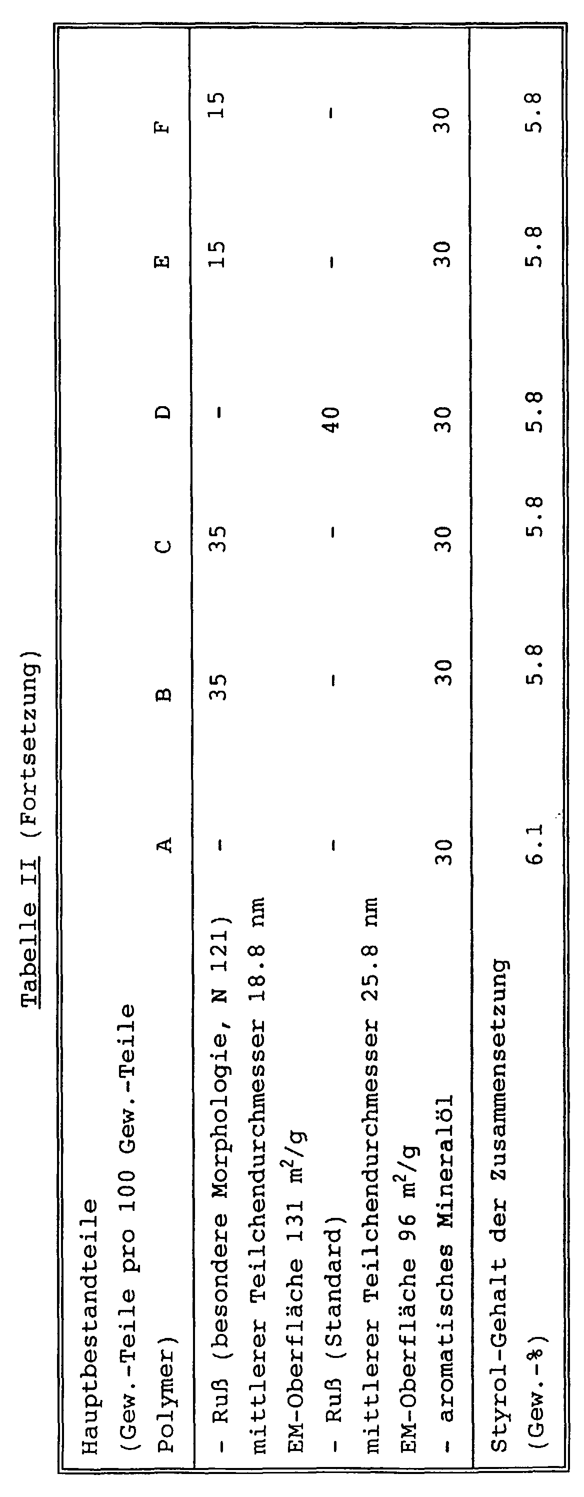 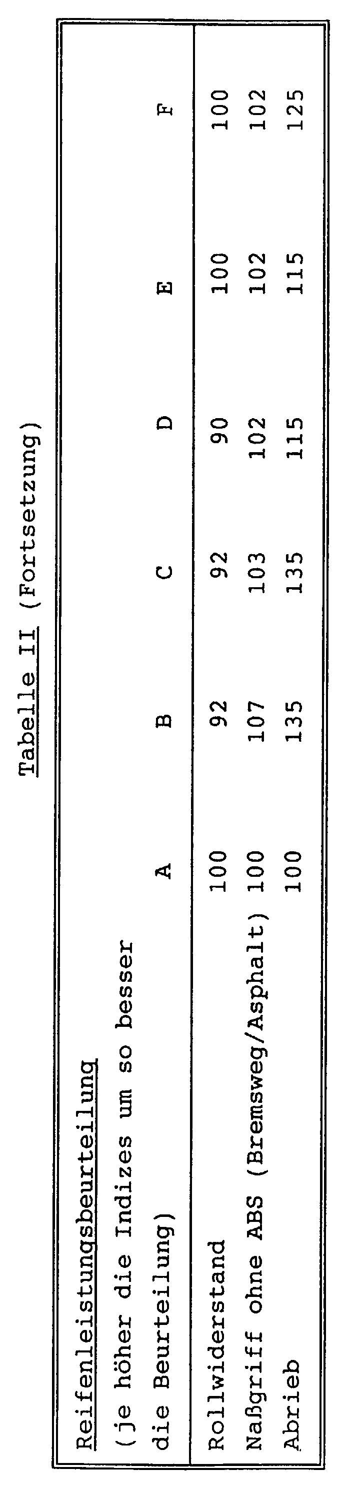
g) Der Vergleich der Beispiele für die Mischungen G und H zeigt den Einfluß des synergistischen Effekts von Gemischen aus zwei unterschiedlichen Copolymeren (Kautschuken) mit verschiedenen Styrol- und Vinyl-Anteilen. Die Mischungen G und H sind bis auf dieses Merkmal identisch. Der Einfluß dieses synergistischen Effekts macht sich insbesondere bei der Beurteilung des Rollwiderstands und des Naßgriffs ohne ABS (Bremsweg auf Asphalt oder Beton) positiv bemerkbar.

Die nachfolgende Tabelle III veranschaulicht die erhaltenen Ergebnisse:

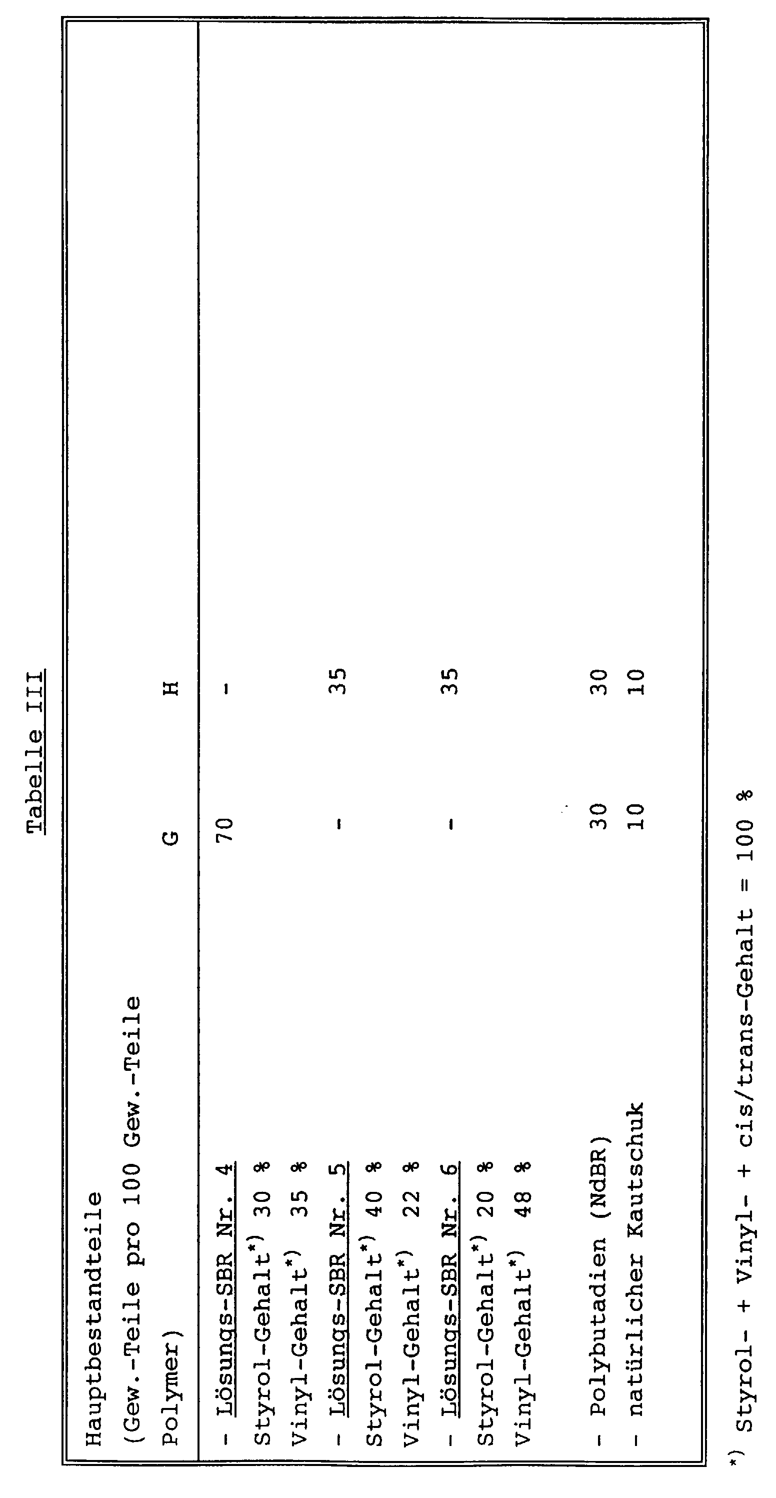

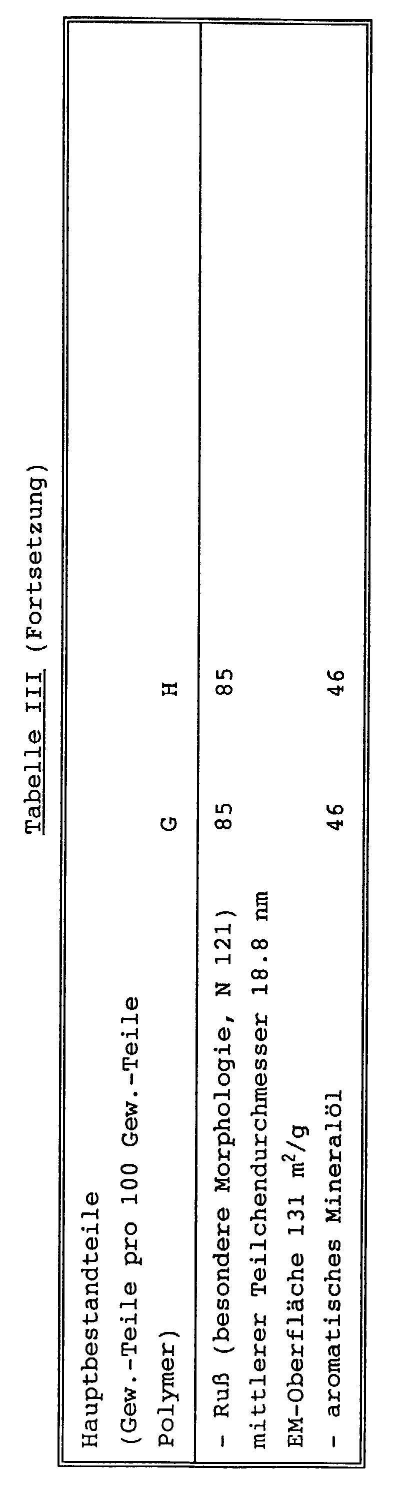

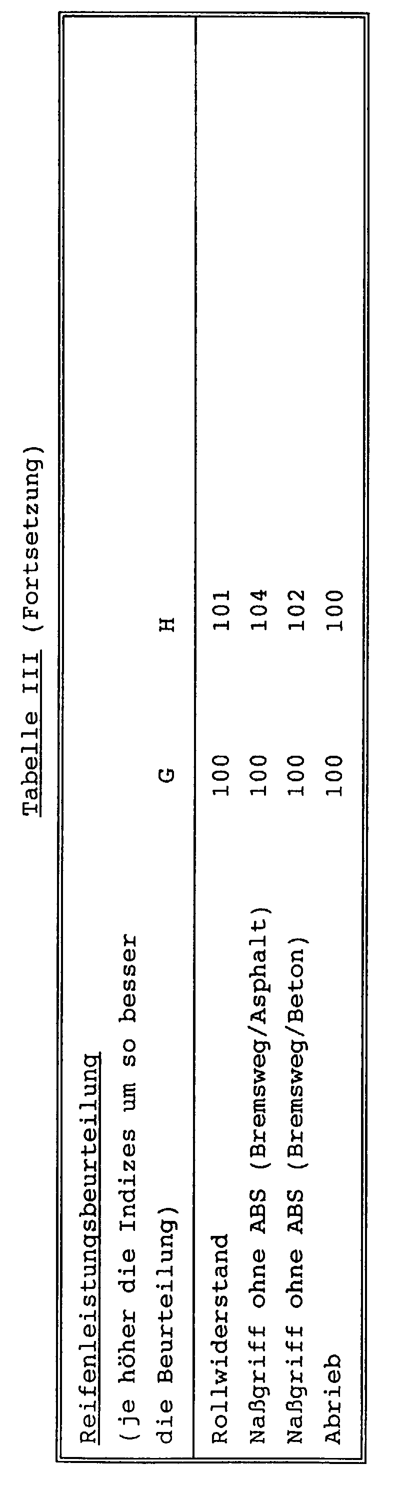

## Patentansprüche

1. Reifenlaufstreifen erhältlich durch Vulkanisieren einer mit Schwefel vulkanisierbaren Kautschukmischung auf der Basis wenigstens eines Copolymeren eines konjugierten Diens und einer aromatischen Vinylverbindung enthaltend Ruß und gegebenenfalls feinverteilte, gefällte Kieselsäure als Füllmaterial, gegebenenfalls wenigstens ein Dien-Elastomer als weiteres Polymer sowie gegebenenfalls weitere übliche Zusätze, dadurch gekennzeichnet, daß als Ruß der Ruß mit der ASTM Bezeichnung N 121 eingesetzt wird und daß das Füllmaterial in einer Menge von 20-150 Gew.-Teilen, bezogen auf 100 Gew.-Teile der Gesamtmenge Polymer, enthalten ist.

2. Reifenlaufstreifen nach Anspruch 1, dadurch gekennzeichnet, daß die Kautschukmischung den Ruß in Kombination mit einer feinverteilten, gefällten Kieselsäure enthält, die eine BET-Fläche von 40 bis 350 m²/g, eine CTAB-Fläche von 50 bis 350 m²/g, einen mittleren Teilchendurchmesser von 10 bis 150 µm sowie eine DBP-Zahl von 50-350 ml/100 g besitzt.

3. Reifenlaufstreifen nach Anspruch 1, dadurch gekennzeichnet, daß die Kautschukmischung den Ruß in Kombination mit einer Kieselsäure einer besonderen Morphologie enthält, die eine N₂-Oberfläche 35 m²/g bis 350 m²/g, bei einem BET/CTAB-Verhältnis von 0,8 bis 1,2 besitzen und gleichzeitig wie unten angegeben, je nach Oberflächenbereich ein Porenvolumen, gemessen mittels Quecksilberporosimetrie (DIN 66 133), Silanolgruppendichten, gemessen in Form der Sears-Zahlen sowie eine mittlere Aggregatgröße, gemessen mittels Photonenkorrelationsspektroskopie, besitzen:
| N₂-Oberfläche [m²/g] | Hg-Porosimetrie [ml/g] | Sears-Zahl V₂ [ml] | Mittlere Aggregatgröße [nm] |
|---|---|---|---|
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

4. Reifenlaufstreifen nach Anspruch 3, dadurch gekennzeichnet, daß die Kieselsäure eine gute Vermahlbarkeit, wiedergegeben durch die mittlere Teilchengröße nach Malvern-Laserbeugung [D (4,3)] von ≤ 11 µm, gemessen nach Vermahlung auf einer Alpine-Kolloplex-Prallstiftmühle (Z 160) bei einer Durchsatzleistung von 6 kg/h aufweist.

5. Reifenlaufstreifen nach einem oder mehreren der Ansprüche 1 bis 4, dadurch gekennzeichnet, daß das Volumenverhältnis von Kieselsäure zu dem Ruß 1:4 bis 5:1 beträgt.

6. Reifenlaufstreifen nach einem oder mehreren der Ansprüche 1 bis 5, dadurch gekennzeichnet, daß die Oberflächen der Kieselsäuren zusätzlich mit Silankupplungsmitteln der Formeln I bis III
[Rₙ¹-(RO)₃₋ₙ Si-(Alk)ₘ - (Ar)ₚ]_{q}[B] (I),
Rₙ¹ (RO)₃₋ₙ Si-(Alkyl) (II),
oder
Rₙ¹ (RO)₃₋ₙ Si-(Alkenyl) (III),
modifiziert sind, in denen bedeuten
B: -SCN, -SH, -Cl, -NH₂ (wenn q = 1) oder -Sₓ (wenn q = 2),
R und R¹: eine Alkylgruppe mit 1 bis 4 Kohlenstoffatomen, den Phenylrest, wobei alle Reste R und R¹ jeweils die gleiche oder eine verschiedene Bedeutung haben können,
n: 0,1 oder 2,
Alk: einen zweiwertigen geraden oder verzweigten Kohlenwasserstoffrest mit 1 bis 6 Kohlenstoffatomen,
m: 0 oder 1,
Ar: einen Arylenrest mit 6 bis 12 C-Atomen,
p: 0 oder 1 mit der Maßgabe, daß p und n nicht gleichzeitig 0 bedeuten,
x: eine Zahl von 2 bis 8,
Alkyl: einen einwertigen geraden oder verzweigten gesättigten Kohlenwasserstoffrest mit 1 bis 20 Kohlenstoffatomen,
Alkenyl: einen einwertigen geraden oder verzweigten ungesättigten Kohlenwasserstoffrest mit 2 bis 20 Kohlenstoffatomen.

7. Reifenlaufstreifen nach Anspruch 6, dadurch gekennzeichnet, daß das Silankupplungsmittel ausgewählt ist aus Bis(3-triethoxysilylpropyl)tetrasulfid, Bis(2-triethoxysilylethyl)tetrasulfid, Bis(3-trimethoxysilylpropyl)tetrasulfid, Bis(2-trimethoxysilylethyl)tetrasulfid, 3-Mercaptopropyltrimethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxysilan, 2-Chloroethyltrimethoxysilan, 2-Chloroethyltriethoxysilan, 3- Trimethoxysilylpropyl-N,N-dimethylthiocarbamoyltetrasulfid, 3-Triethoxysilylpropyl-N,N-dimethylthiocarbamoyltetrasulfid, 3-Trimethoxysilylpropylbenzothiazoltetrasulfid, 3-Triethoxysilylpropylbenzothiazoltetrasulfid, 3-Triethoxysilylpropylmethacrylatmonosulfid, 3-Trimethoxysilylpropylmethacrylatmonosulfid, Bis(3-diethoxymethylsilylpropyl)tetrasulfid, 3-Mercaptopropyldimethoxymethylsilan, 3-Nitropropyldimethoxymethylsilan, 3-Chloropropyldimethoxymethylsilan, Dimethoxymethylsilylpropyl-N,N-dimethylthiocarbamoyltetrasulfid, Dimethoxymethylsilylpropylbenzothiazoltetrasulfid, 3-Thiocyanatopropyltriethoxysilan, 3-Thiocyanatopropyltrimethoxysilan, Trimethoxyvinylsilan, Triethoxyvinylsilan.

8. Reifenlaufstreifen nach Ansprüchen 6 oder 7, dadurch gekennzeichnet, daß die mit den Silankupplungsmitteln modifizierten Kieselsäuren erhältlich sind durch Umsetzung von 0,2 bis 30 Gew.-Teilen des Silankupplungsmittels bezogen auf 100 Gew.-Teile der Kieselsäure, wobei die Reaktion zwischen Kieselsäure und Silankupplungsmittel während der Mischungsherstellung (in situ) oder außerhalb (vormodifiziert) durchgeführt werden kann.

9. Reifenlaufstreifen nach einem oder mehreren der Ansprüche 1 bis 8, dadurch gekennzeichnet, daß das konjugierte Dien ausgewählt ist aus 1,3-Butadien, Isopren, 2,3-Dimethyl-1,3-butadien, Chloropren, 1,3-Pentadien, Hexadien oder Gemischen davon.

10. Reifenlaufstreifen nach einem oder mehreren der Ansprüche 1 bis 9, dadurch gekennzeichnet, daß die aromatische Vinylverbindung ausgewählt ist aus Styrol, α-Methylstyrol, p-Methylstyrol, o-Methylstyrol, p-Butylstyrol, Vinylnaphthalin oder Gemischen davon.

11. Reifenlaufstreifen nach einem oder mehreren der Ansprüche 1 bis 10, dadurch gekennzeichnet, daß das Copolymere aus dem konjugierten Dien und der aromatischen Vinylverbindung erhältlich ist durch Lösungspolymerisation.

12. Reifenlaufstreifen nach einem oder mehreren der Ansprüche 1 bis 11, dadurch gekennzeichnet, daß zwei unterschiedliche Copolymere eines konjugierten Diens und einer aromatischen Vinylverbindung eingesetzt werden.

13. Reifenlaufstreifen nach Anspruch 12, dadurch gekennzeichnet, daß die zwei unterschiedlichen Copolymere aus Styrol und Butadien erhältlich sind und einen unterschiedlichen Styrol- und/oder Vinylanteil aufweisen, der Styrolanteil zwischen 10 und 40 %, der Vinylanteil 10 bis 50 % beträgt, wobei gilt, daß Styrolanteil + Vinylanteil + cis-/trans-Isomer-Anteil in der Polymermolekülkette 100 % ist.

14. Reifenlaufstreifen nach Anspruch 13, dadurch gekennzeichnet, daß das Verhältnis der unterschiedlichen Copolymere zueinander 2:1 bis 1:2 beträgt.

15. Reifenlaufstreifen nach einem oder mehreren der Ansprüche 1 bis 14, dadurch gekennzeichnet, daß sie bis zu 70 Gew.-Teile, bezogen auf 100 Gew.-Teile des Copolymeren-Gehalts, von mindestens einem anderen Dien-Elastomer enthält, das ausgewählt ist aus Naturkautschuk (NK), Polyisopren und Polybutadien und Isopren-Butadien-Copolymeren.

16. Reifenlaufstreifen nach Anspruch 15, dadurch gekennzeichnet, daß das Dien-Elastomer erhältlich ist durch Polymerisation der Monomere in Gegenwart von Katalysatoren, die Übergangsmetalle enthalten, die ausgewählt sind aus Kobalt, Titan, Nickel und Neodym.

17. Reifenlaufstreifen nach einem oder mehreren der Ansprüche 1 bis 16, dadurch gekennzeichnet, daß sie insgesamt 2 bis 20 Gew.-%, bezogen auf das Gewicht der Kautschukgesamtmischung, Styrol enthält.

## Claims

1. Tyre tread strip obtainable by vulcanising a rubber mixture, which is vulcanisable with sulphur and based on at least one copolymer of a conjugated diene and one aromatic vinyl compound containing carbon black and possibly finely distributed, precipitated silica as the filling material, possibly at least one diene elastomer as the additional polymer and possibly additional conventional additives, characterised in that the carbon black with ASTM reference N 121 is used as the carbon black, and in that the filling material is contained in a quantity of 20-150 parts by wt. relative to 100 parts by wt. of the total quantity of polymer.

2. Tyre tread strip according to claim 1, characterised in that the rubber mixture contains the carbon black in combination with a finely distributed, precipitated silica, which has a BET surface of between 40 and 350 m²/g, a CTAB surface of between 50 and 350 m²/g, a mean particle diameter of between 10 and 150 µm and a DBP number of 50-350 ml/100 g.

3. Tyre tread strip according to claim 1, characterised in that the rubber mixture contains the carbon black in combination with a silica of a specific morphology, which has a N₂ surface of between 35 m²/g and 350 m²/g, with a BET:CTAB ratio of between 0.8 and 1.2 and simultaneously has, as stated below, depending on the surface region, a pore volume, measured by means of mercury porosimetry (DIN 66 133), silanol group densities, measured in the form of Sears numbers and a mean aggregate size, measured by means of photon correlation spectroscopy:
| N₂ surface [m²/g] | Hg porosimetry [ml/g] | Sears number V₂ [ml] | Mean aggregate size [nm] |
|---|---|---|---|
| < 100 | 2.5 - 3.4 | 6 - 12 | 900 - 1500 |
| 100 - 150 | 2.4 - 3.2 | 8 - 15 | 400 - 850 |
| 150 - 200 | 1.8 - 2.6 | 10 - 16 | 300 - 550 |
| > 200 | 1.6 - 2.3 | 12 - 20 | 250 - 520 |

4. Tyre tread strip according to claim 3, characterised in that the silica has a good comminutability, shown by the mean particle size in accordance with Malvern laser diffraction [D (4.3)] of ≤ 11 µm, measured after comminution on an Alpine Kolloplex impact pulveriser (Z 160) at a throughput capacity of 6 kg/h.

5. Tyre tread strip according to one or more of claims 1 to 4, characterised in that the volumetric ratio of silica to the carbon black is between 1:4 and 5:1.

6. Tyre tread strip according to one or more of claims 1 to 5, characterised in that the surfaces of the silicas are additionally modified with silane coupling agents of formulae I to III:
[Rₙ¹ - (RO)₃₋ₙ Si - (Alk)ₘ - (Ar)ₚ]_{q}[B] (I),
Rₙ¹ (RO)₃₋ₙ Si-(Alkyl) (II),
or
Rₙ¹ (RO)₃₋ₙ Si - (Alkenyl) (III),
in which the meanings are as follows:
B: -SCN, -SH, -Cl, -NH₂ (when q = 1) or -Sₓ (when q = 2),
R and R¹: an alkyl group having 1 to 4 carbon atoms, the phenyl residue, wherein all of the residues R and R¹ can each have the same or a different meaning,
n: 0.1 or 2,
Alk: a bivalent straight or branched hydrocarbon residue having 1 to 6 carbon atoms,
m: 0 or 1,
Ar: an arylene residue having 6 to 12 C atoms,
p: 0 or 1 with the proviso that p and n do not simultaneously signify 0,
x: a number from 2 to 8,
Alkyl: a monovalent straight or branched saturated hydrocarbon residue having 1 to 20 carbon atoms,
Alkenyl: a monovalent straight or branched unsaturated hydrocarbon residue having 2 to 20 carbon atoms.

7. Tyre tread strip according to claim 6, characterised in that the silane coupling agent is selected from bis(3-triethoxysilylpropyl)tetrasulphide, bis(2-triethoxysilylethyl)tetrasulphide, bis(3-trimethoxysilylpropyl)tetrasulphide, bis(2-trimethoxysilylethyl)tetrasulphide, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxysilane, 2-chloroethyltrimethoxysilane, 2-chloroethyltriethoxysilane, 3-trimethoxysilylpropyl-N,N-dimethylthiocarbamoyltetrasulphide, 3-triethoxysilylpropyl-N,N-dimethylthiocarbamoyltetrasulphide, 3-trimethoxysilylpropylbenzothiazoltetrasulphide, 3-triethoxysilylpropylbenzothiazoltetrasulphide, 3-triethoxysilylpropylmethacrylatemonosulphide, 3-trimethoxysilylpropylmethacrylatemonosulphide, bis(3-diethoxymethylsilylpropyl)tetrasulphide, 3-mercaptopropyldimethoxymethylsilane, 3-nitropropyldilnethoxynethylsilane, 3-chloropropyldimethoxymethylsilane dimethoxymethylsilylpropyl-N,Ndimethylthiocarbarnoyltetrasulphide, dimethoxymethylsilylpropylbenzothiazoltetrasulphide, 3-thiocyanatopropyltriethoxysilane, 3-thiocyanatopropyltrimethoxysilane, trimethoxyvinylsilane, triethoxyvinylsilane.

8. Tyre tread strip according to claims 6 or 7, characterised in that the silicas, modified with the silane coupling agents, are obtainable by reacting between 0.2 and 30 parts by wt. of the silane coupling agent relative to 100 parts by wt. of the silica, wherein the reaction between silica and silane coupling agent can be effected during the production of the mixture (in situ) or externally (premodified).

9. Tyre tread strip according to one or more of claims 1 to 8, characterised in that the conjugated diene is selected from 1,3-butadiene, isoprene, 2,3-dimethyl-1,3-butadiene, chloroprene, 1,3-pentadiene, hexadiene or mixtures thereof.

10. Tyre tread strip according to one or more of claims 1 to 9, characterised in that the aromatic vinyl compound is selected from styrene, α-methylstyrene, p-methylstyrene, o-methylstyrene, p-butylstyrene, vinylnaphthaline or mixtures thereof.

11. Tyre tread strip according to one or more of claims 1 to 10, characterised in that the copolymer is obtainable from the conjugated diene and the aromatic vinyl compound by solution polymerisation.

12. Tyre tread strip according to one or more of claims 1 to 11, characterised in that two different copolymers of a conjugated diene and an aromatic vinyl compound are used.

13. Tyre tread strip according to claim 12, characterised in that the two different copolymers are obtainable from styrene and butadiene and have a different styrene and/or vinyl proportion, the styrene proportion is between 10 and 40 %, the vinyl proportion is between 10 and 50 %, with the result that styrene proportion + vinyl proportion + cis-/trans-isomer proportion in the polymer molecule chain is 100 %.

14. Tyre tread strip according to claim 13, characterised in that the ratio of the various polymers to one another is between 2:1 and 1:2.

15. Tyre tread strip according to one or more of claims 1 to 14, characterised in that it contains up to 70 parts by wt., relative to 100 parts by wt. of the copolymer content, of at least one other diene elastomer, which is selected from natural rubber (NR), polyisoprene and polybutadiene and isoprene-butadiene copolymers.

16. Tyre tread strip according to claim 15, characterised in that the diene elastomer is obtainable through polymerisation of the monomers in the presence of catalysts which contain transition metals selected from cobalt, titanium, nickel and neodymium.

17. Tyre tread strip according to one or more of claims 1 to 16, characterised in that it contains, in total, between 2 and 20 % by wt. styrene relative to the weight of the total rubber mixture.

## Revendications

1. Bande de roulement de pneumatique pouvant être formée par vulcanisation d'un mélange de caoutchouc vulcanisable par le soufre, à base d'au moins un copolymère d'un diène conjugué et d'un composé vinylique aromatique contenant, comme matière du charge, du noir de carbone et éventuellement de l'acide silicique finement divisé, précipité, éventuellement au moins un élastomère de diène en tant que polymère additionnel ainsi qu'éventuellement d'autres additifs habituels, caractérisé en ce qu'on utilise comme noir de carbone le noir de carbone répondant à la spécification ASTM N 121 et en ce que la matière de charge est incorporée en une quantité de 20-150 parties en poids, rapportée à 100 parties en poids de la quantité totale de polymère.

2. Bande de roulement de pneumatique selon la revendication 1, caractérisée en ce que le mélange de caoutchouc contient le noir de carbone en combinaison avec un acide silicique finement divisé, précipité, qui possède une surface BET de 40 à 350 m²/g, une surface CATB de 50 à 350 m²/g, un diamètre moyen de particules de 10 à 150 m, ainsi qu'un indice DBP de 50-350 ml/100g.

3. Bande de roulement de pneumatique selon la revendication 1, caractérisée en ce que le mélange de caoutchouc contient le noir de carbone en combinaison avec un acide silicique ayant une morphologie particulière, qui possède une surface n₂ de 35 m²/g à 350 m²/g, avec un rapport BET-CATB de 0,8 à 1,2 et, en même temps, comme indiqué plus bas, selon la zone de la surface, un volume de pores, mesuré par porosimétrie au mercure (DIN 66 133], des densités de groupes silanol, mesurées sous la forme des indices Sears, ainsi qu'une taille moyenne d'agrégats, mesurée par spectroscopie de corrélation de photons :
| Surface N₂ [m²/g] | Porosimétrie Hg [ml/g] | Indice Sears V₂ [ml] | Taille moyenne des agrégats [nm] |
|---|---|---|---|
| < 100 | 2,5-3,4 | 6-12 | 900 - 1500 |
| 100 - 150 | 2,4-3,2 | 8-15 | 400 - 850 |
| 150 - 200 | 1,8-2,6 | 10 - 16 | 300 - 550 |
| > 200 | 1,6 - 2,3 | 12 - 20 | 250 - 520 |

4. Bande de roulement de pneumatique selon la revendication 3, caractérisée en ce que l'acide silicique présente une bonne aptitude au broyage, qui est révélée par la taille moyenne des particules, d'après la diffraction du rayon laser de Malvern [D [4,3]] de 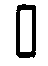 11 µm, mesurée après le broyage sur un broyeur à barres Kolloplex de Alpine (Z 160] à un débit de 6 kg/h.

5. Bande de roulement de pneumatique selon une ou plusieurs des revendications 1 à 4, caractérisée en ce que le rapport en volume entre l'acide silicique et le noir de carbone est de 1:4 à 5: 1.

6. Bande de roulement de pneumatique selon une ou plusieurs des revendications 1 à 5, caractérisée en ce que les surfaces des acides siliciques sont modifiées, en supplément avec des moyens de couplage silane des formules I à III :
[Rₙ¹ - [RO]₃₋ₙ Si-[Alk]ₘ - [Ar]ₚ]_{q}[B] [I],
Rₙ¹ [RO]₃₋ₙ Si-[alkyle] [II]
ou
Rₙ¹ [RO]₃₋ₙ Si-[alkényle] [III],
formules dans lesquelles
B : -SCN, -SH, -Cl, -NH₂ [lorsque q = 1] ou -Sₓ (lorsque q = 2],
R et R¹ : un groupe alkyle possédant 1 à 4 atomes de carbone, le reste phénylique, ou les restes R et R¹ pouvant avoir la même signification ou des significations différentes,
n : 0,1 ou 2
Alk : un reste hydrocarbure bivalent, droit ou ramifié, possédant 1 à 6 atomes de carbone.
m : 0 ou 1
Ar : un reste arylène possédant 6 à 12 atomes de C
p : 0 ou 1 avec la condition que p et n ne peuvent pas signifier 0 en même temps,
x: un nombre de 2 à 8,
alkyle : un reste hydrocarbure saturé, monovalent, droit ou ramifié, possédant 1 à 20 atomes de carbone,
alkényle : un reste hydrocarbure insaturé, monovalent, droit ou ramifié, possédant 2 à 20 atomes de carbone.

7. Bande de roulement de pneumatique selon la revendication 6, caractérisée en ce que l'agent de couplage silane est choisi parmi bis[3-triéthoxysilylpropyl]tétrasulfure, bis(2-triéthoxysilyléthyl]tétrasulfure, bis(3-triméthoxysilylpropyl]tétrasulfure, bis(2-triméthoxysilyléthyl]tétrasulfure, 3-mercaptopropyltriméthoxysilane, 3-mercapto-propyltriéthoxysilane, 2-mercarptoéthyltriméthoxysilane, 2-mercaptoéthyltriéthoxy-silane, 3-nitropropyltriméthoxysilane, 3-nitropropyltriéthoxysilane, 3-chloropropyl-triméthoxysilane, 3-chloropropyltriéthoxysilane, 2-chloroéthyltriméthoxysilane, 2-chloroéthyltriéthoxysilane, 3-triméthoxysilylpropyl-N, N-diméthylthiocarbamoyl-tétrasulfure, 3-triéthoxysilylpropyl-N, N-diméthylthiocarbamoyltétrasulfure, 3-tri-méthoxysilylpropylbenzothiazoltétrasulfure, 3-triéthoxysilylpropylbenzothiazoltétra-sulfure, 3-triéthoxysilylpropylméthacrylatemonosufure, 3-triméthoxysilylpropyl-méthacrylatemonosulfure, bis[3-diéthoxyméthylsilylpropyl]tétrasulfure, 3-mercapto-propyldiméthoxyméthylsilane, 3-nitropropyldiméthoxyméthylsilane, 3-chloro-propyldiméthoxyméthylsilane, diméthoxyméthylsilylpropyl-N, N-diméthylthio-carbamoyltétrasulfure, diméthoxyméthylsilylpropylbenzothiazoltétrasulfure, 3-thio-cyanatopropyltriéthoxysilane, 3-thiocyantopropyltriméthoxysilane, triméthoxyvinyl-silane, triéthoxyvinylsilane.

8. Bande de roulement de pneumatique selon la revendication 6 ou 7, caractérisée en ce que les acides siliciques modifiés par des agents de couplage silane peuvent être préparés par transformation de 0,2 à 30 parties en poids de l'agent de couplage silane, rapportées à 100 parties en poids de l'acide silicique, la réaction entre l'acide silicique et l'agent de couplage silane pouvant être effectuée pendant la préparation du mélange [in situ) ou en dehors [prémodifié].

9. Bande de roulement de pneumatique selon ou plusieurs des revendications 1 à 8, caractérisée en ce que le diène conjugué est choisi parmi les suivants : 1,3-butadiène, isoprène, 2,3-diméthyl-1,3-butadiène, chloroprène, 1,3-pentadiène, hexadiène ou des mélanges de ces substances.

10. Bande de roulement de pneumatique selon une ou plusieurs des revendications 1 à 9, caractérisée en ce que le composé vinylique aromatique est choisi parmi les suivants : styrène, 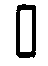 -méthylstyrène, p-méthylstyrène, o-méthylstyrène, p-butylstyrène, vinylnaphtaline ou des mélanges de ces substances.

11. Bande de roulement de pneumatique selon une ou plusieurs des revendications 1 à 10, caractérisée en ce que le copolymère issu du diène conjugué et du composé vinylique aromatique peut être préparé par polymérisation en solution.

12. Bande de roulement de pneumatique selon une des revendications 1 à 11, caractérisée en ce qu'on utilise deux copolymères différents d'un diène conjugué et d'un composé vinylique aromatique.

13. Bande de roulement de pneumatique selon la revendication 12, caractérisée en ce que les deux copolymères différents peuvent être préparés à partir de styrène et de butadiène et présentent différentes proportions de styrène et/ou de vinyle, la fraction styrène étant d'entre 10 et 40 %, la fraction vinyle de 10 à 50 %, où fraction styrène + fraction vinyle + fraction cis/trans-isomère dans la chaîne de la molécule de polymère = 100 %.

14. Bande de roulement de pneumatique selon la revendication 13, caractérisée en ce que le rapport entre les différents copolymères est de 2:1 à 1:2.

15. Bande de roulement de pneumatique selon une ou plusieurs des revendications 1 à 14, caractérisée en ce qu'elle comprend jusqu'à 70 % en poids, rapporté à 100 % en poids de la teneur en copolymères, d'au moins un autre élastomère de diène, qui est choisi parmi les suivants : caoutchouc naturel [NK], polyisoprène et polybutadiène et copolymères isoprène-butadiène.

16. Bande de roulement selon la revendication 15, caractérisée en ce que l'élastomère de diène peut être préparé par polymérisation des monomères en présence de catalyseurs qui contiennent des métaux de transition qui sont choisis parmi les suivants : cobalt, titane, nickel et néodyme.

17. Bande de roulement de pneumatique selon une ou plusieurs des revendications 1 à 16, caractérisée en ce qu'elle contient au total 2 à 20 % en poids de styrène, rapporté au poids total du mélange de caoutchouc.
